# EUROPEAN PATENT APPLICATION

(11) **EP 4 644 259 A1**
(43) Date of publication of application: **05.11.2025**
(21) Application number: 24275052.9
(22) Date of filing: 02.05.2024
(51) Int. Cl.: B64F 1/12, B64D 9/00

(54) **LOCKING SYSTEM, VEHICLE LOCKING SYSTEM, CARGO LOCKING SYSTEM, AND METHOD**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

According to the present disclosure, there is provided a locking system for locking a vehicle or item of cargo in a position on a surface, the locking system comprising: an electromagnetic locking arrangement configured to be selectively operatable to attract the vehicle or item of cargo, thereby to lock the vehicle or item of cargo in the position on the surface.

## Description

### FIELD

The present invention relates to a locking system, in particular to a locking system for locking a vehicle or item of cargo in a position on a surface. The present invention further relates to a vehicle locking system, a cargo locking system, and a method.

### BACKGROUND

High value assets are moved to, from and around airports, airfields and cargo ships. Such assets include vehicles, such as aircraft, and freight, for example items of cargo such as shipping containers. For protection of these assets, and additionally for aviation safety, it is necessary to control the movement of said assets.

It is a problem that the movement of assets may be inadvertent, unauthorised, and/or unexpected.

In the context of airports and airfields (including at civil and military airports, aircraft carriers, offshore installations, and other landing areas), vehicles may be required to taxi, or otherwise move, around the airport or airfield. Inadvertent, unauthorised, and/or unexpected movement of vehicles may occur due to lack of awareness of aircrew, lack of awareness of ground operations crew, operational need to meet short turnaround times, small and restrictive landing areas, and environmental factors such as high winds, rough sea states, and night time operations.

Typically, aircraft are provided with a parking brake system. The parking brake system may be operated completely or in part by the aircrew. The parking brake system may be released inadvertently, unexpectedly, or when operating under difficult conditions. It is a problem that aircrew may release the parking brake system to start push back, taxi, or other movement without authorisation from a ground operations crew or air traffic control. This presents a safety risk to other users of the airport or airfield.

In the context of cargo ships, cargo may be loaded onto the cargo ship for transport. Inadvertent, unauthorised, and/or unexpected movement of cargo may occur due to lack of awareness of a ship operations crew (such as incorrect selection of an item of cargo to be moved), theft or attempted theft, or environmental factors, such as rough sea states and ship movement. This presents both a safety risk and may lead to loss of assets.

It is an aim of the present invention to address one or more of the problems described above, or discussed elsewhere, or to at least provide an alternative solution.

### SUMMARY

According to a first aspect of the present invention, there is provided a locking system for locking a vehicle or item of cargo in a position on a surface, the locking system comprising: an electromagnetic locking arrangement configured to be selectively operatable to attract the vehicle or item of cargo, thereby to lock the vehicle or item of cargo in the position on the surface.

In one example, the vehicle is an aircraft.

In one example, the locking system comprises a control arrangement operable to control the provision of electrical power to the electromagnetic locking arrangement.

In one example, the locking system comprises a locking status indicator system.

In one example, the electromagnetic locking arrangement comprises one or more electromagnets.

In one example, the one or more electromagnets comprises one or more fail-safe electromagnets configured to release the vehicle or item of cargo when electrical power provided to the electromagnetic locking system is terminated.

In one example, at least a part of the electromagnetic locking arrangement is provided at the surface.

In one example, at least a part of the electromagnetic locking arrangement is provided below the surface.

In one example, at least a part of the electromagnetic locking arrangement is provided in a ground plate.

In one example, the locking system comprises an override system operable to control the electromagnetic locking arrangement to release the vehicle or item of cargo based on an override signal.

In one example, the electromagnetic locking arrangement is provided in a runway, taxiway, or stand of an airfield.

In one example, the electromagnetic locking arrangement is provided in a deck of a cargo ship.

In one example, the electromagnetic locking arrangement is provided in a floor of a hangar.

According to a second aspect of the present invention, there is provided a vehicle locking system comprising: the locking system according to the first aspect of the present invention; and a vehicle.

In one example, the vehicle is an aircraft.

According to a third aspect of the present invention, there is provided a cargo locking system comprising: the locking system according to the first aspect of the present invention; and an item of cargo.

According to a fourth aspect of the present invention, there is provided a method of locking a vehicle or item of cargo in a position on a surface, comprising: providing an electromagnetic locking arrangement configured to be selectively operable to attract the vehicle or item of cargo; and operating the electromagnetic locking arrangement to attract the vehicle or item of cargo, thereby to lock the vehicle or item of cargo in the position on the surface.

In one example, the method comprises releasing the vehicle or item of cargo by reducing a level of electrical power provided to the electromagnetic locking arrangement below a threshold level.

### BRIEF DESCRIPTION OF THE FIGURES

Embodiments of the invention will now be described by way of example only with reference to the figures, in which:
Figure 1 shows a schematic of a locking system;
Figure 2 shows a locking system;
Figure 3 shows a user interface;
Figure 4 shows a vehicle locking system;
Figure 5 shows a cargo locking system; and
Figure 6 shows general methodology principles.

### DETAILED DESCRIPTION

In summary, a locking system is disclosed for locking a vehicle or item of cargo in a position on a surface. By the term "locking", it is meant that the vehicle or item of cargo is maintained or held in a position by the locking system. Advantageously, the locking or releasing of the vehicle or item of cargo can be remotely, or centrally, controlled. Whilst the locking system is described to be used in locking vehicles or items of cargo in position, it will be appreciated from the description herein that other objects may be locked in position, provided they may be acted on by the electromagnetic locking arrangement to hold them in position (i.e., said object comprises magnetic materials or components made thereof).

Furthermore, the "surface" may be any surface on which the object may be provided. In the context of airports and airfields, the surface may be a runway, taxiway, or stand of an airfield. In the context of cargo ships, the surface may be a deck of a cargo ship, or indeed may be a surface of a cargo container on which a further container is to be locked (for example a top surface of a container, in a vertically stacked configuration). In other contexts, the surface may be a floor of a hangar, or other ground surface. In these other contexts, the locking system may facilitate the locking of a train, locomotive, or heavy goods vehicle, for example during maintenance.

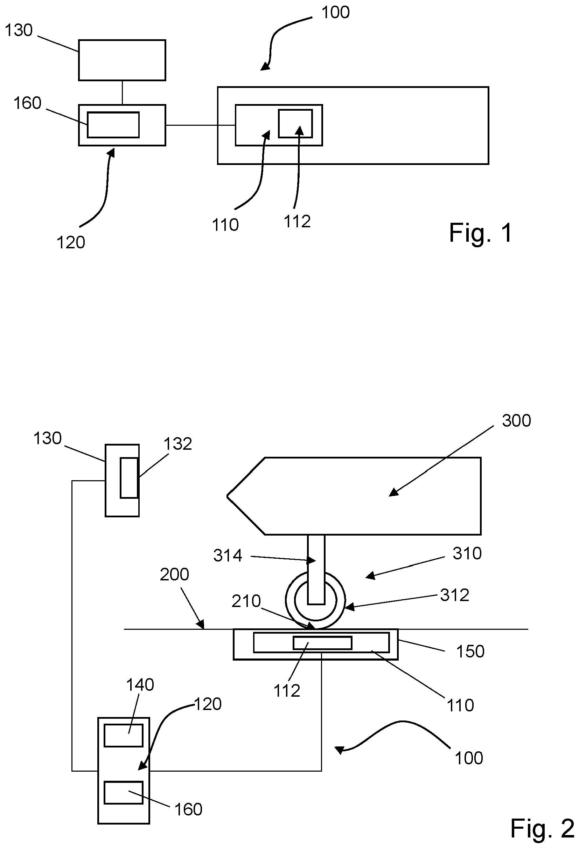

Referring to Figure 1, a locking system 100 is shown. The locking system 100 is for locking an object or "asset", such as a vehicle or item of cargo, in a position on a surface.

The locking system 100 comprises an electromagnetic locking arrangement 110. The electromagnetic locking arrangement 110 is configured to be selectively operatable to attract the object, thereby to lock the object in the position on the surface. As will be described in greater detail below, the electromagnetic locking arrangement 110 may comprise one or more electromagnetic locks.

Such an arrangement is highly advantageous in preventing inadvertent, unauthorised, and/or unexpected movement of objects (e.g., vehicles, such as aircraft, or items of cargo). The position of the object may be maintained by the operation of the electromagnetic locking arrangement 110 until a time at which it is deemed safe or appropriate for the object to move. At which point, the object can be released by the electromagnetic locking arrangement 110 (and control thereof), thereby allowing movement. This may be analogous to a clearance indication provided by air traffic control or ground operations crew, but unlike existing approaches, avoids inadvertent, unauthorised and/or unexpected movement for the reasons set out in the background of the invention, such as inadvertent, unauthorised or unexpected release of an aircraft parking brake system.

Highly advantageously, the electromagnetic locking arrangement 110 may comprise a plurality of electromagnets 112, or "electromagnetic locks 112", each electromagnetic lock 112 being provided in a different position in an operating space such as an airport, airfield or cargo ship. In this way, movement of multiple objects may be controlled, possibly simultaneously, to improve traffic control and safety. For avoidance of doubt, the term "electromagnetic lock" may refer to each electromagnet 112 of the electromagnetic locking arrangement 110, where it will be appreciated that the electromagnetic locking arrangement 110 may comprise one or more electromagnetic locks 112. An electromagnetic lock has the same function as the electromagnetic locking arrangement 110. That is, each electromagnetic lock 112 is configured to be selectively operatable to attract the object, thereby to lock the object in the position on the surface.

The locking system 100 may further comprise a control arrangement 120. The control arrangement 120 is operable to control the provision of electrical power to the electromagnetic locking arrangement 110. In this way, electrical power can be provided to the electromagnetic locking arrangement 110 to generate a magnetic field to lock (by magnetic attraction) the object in the position on the surface. Advantageously, the control arrangement 120 may be provided remotely from the electromagnetic locking arrangement 110. In this way, a remote operator may control the operation of the electromagnetic locking arrangement 110. For example, the remote operator may be a ground operations crew or air traffic control.

The locking system 100 may further comprise a locking status indicator system 130. The locking status indicator system 130 may otherwise be referred to as a locking state indicator system 130. The locking status indicator system 130 is configured to indicate the locking status of the locking system 100. That is, the locking status indicator system 130 indicates whether the electromagnetic locking arrangement 110 is operational to lock (or attract) an object in place, or whether the electromagnetic locking arrangement 110 is not operational such that the object is not locked in place. The locking status indicator system 130 will be described in greater detail below.

Referring to Figure 2, the locking system 100 is shown in greater detail, and according to an exemplary embodiment. Whilst in Figure 2 and corresponding description the object is an aircraft 300, it will be appreciated by the skilled person that the description applies in a corresponding manner where the object is an item of cargo, or other appropriate object. Furthermore, it will be appreciated that whilst one electromagnetic lock is illustrated, the locking system 100 may comprise additional (possibly many additional) electromagnetic locks 112 provided at different positions or locations.

In this example, the aircraft 300 comprises landing gear 310 having one or more wheels 312 and one or more struts 314 (or "legs"). The landing gear 310 is formed of, or comprises, a magnetic material, for example magnetic steel. In other examples (not illustrated), the aircraft 300 may be a helicopter which comprises skids. The skids may be formed of, or comprise, a magnetic material, for example magnetic steel. The aircraft 300 is positioned on a surface 200 in a position 210. In Figure 2, the position 210 is a stand of an airfield, and the surface 200 is a ground surface of the airfield.

As above, the locking system 100 comprises the electromagnetic locking arrangement 110. The electromagnetic locking arrangement 110 is configured to be selectively operatable to attract the aircraft 300, thereby to lock the aircraft in the position 210 on the surface 200. Here, when the landing gear 310 of the aircraft 300 is provided in proximity of (e.g., on top of) the electromagnetic locking arrangement 310, and the electromagnetic locking arrangement 110 is provided with electrical power, the electromagnetic locking arrangement 110 generates a magnetic field to attract, or act on, a part of the object (here, the aircraft 300), thereby to lock the object in the position 210 on the surface 200. In this example, the electromagnetic locking arrangement 110 generates a magnetic field to attract, or act on, the landing gear 310 of the aircraft 300 thereby to lock the aircraft 300 in the position 210 on the surface 200.

The control arrangement 120 is operable to control the provision of electrical power to the electromagnetic locking arrangement 110. The control arrangement 120 may control the level of electrical power to the electromagnetic locking arrangement 110. Above a threshold level of electrical power provided to the electromagnetic locking arrangement 110, a magnetic field may be generated to lock the object in the position 210. That is, one or more electromagnetic locks 112 may be powered up to lock the object in its position. Alternatively, below a threshold level of electrical power provided to the electromagnetic locking arrangement 110, no magnetic field may be generated, or insufficient magnetic field may be generated, such that the object is no longer locked in place and is released. That is, one or more electromagnetic locks 112 may be depowered to release the object and allow it to move or be moved. The electrical power required for operation of the electromagnetic locking arrangement 110 may be provided by the grid, or from a power source at the airport, airfield, or cargo ship (or any other carrier or transporter of the object). In one example, the electrical power for the electromagnetic locking arrangement 110 may be provided by the existing power supply of a civil aircraft stand.

The control arrangement 120 may be operable to control the provision of electrical power to the electromagnetic locking arrangement 110 based on the object to be locked in the position 210 on the surface 200. This may include controlling electrical power based on the size, power, and/or weight of the object to be locked in the position 210 on the surface 200. The control arrangement 120 may receive input of one or more characteristics (e.g., size, power, weight) of the object and provide electrical power to the electromagnetic locking arrangement 110 based thereon. In this way, a larger, more powerful, and/or heavier object, such as a large aircraft, may be locked in place by providing greater electrical power and thus provide a stronger magnetic field at the electromagnetic locking arrangement 110. Conversely, a smaller aircraft may be locked in place by providing less electrical power and thus a weaker magnetic field at the electromagnetic locking arrangement 110. This may also be achieved by providing an electromagnet of an appropriate size for the object to be locked in position. That is, the electromagnetic locking arrangement 110 may be sized based on one or more characteristics (e.g., size, power, weight) of objects to be locked in the position 210 on the surface 200.

The locking status indicator system 130 is configured to indicate the locking status of the locking system 100. In the example shown in Figure 2, the locking status indicator system 130 is provided in view of the cockpit of the aircraft 300. In this way, the aircrew may determine the locking status of the electromagnetic locking arrangement 110, such that it can be established whether the aircraft is locked in the position 210 on the surface 200 (and thus unauthorised to move) or is released from the position 210 on the surface 200 (and thus authorised to move). In this way, authorisation of movement of the aircraft 300 may be understood, thus improving safety.

Additionally, or alternatively, the locking status indicator system 130 may be provided on the surface 200 itself, for example incorporated in a ground plate 150 provided at the surface 200. In this way, ground operations crew may determine the locking status of the electromagnetic locking arrangement 110, thus improving safety.

The locking status indicator system 130 may comprise a display 132. The display 132 may comprise bulbs or LEDs. When the electromagnetic locking arrangement 110 is operated to attract the object, a visible check mark may be indicated on the display 132. When the electromagnetic locking arrangement 110 is not operated to attract the object (e.g., when the object is released), a cross may be indicated on the display 132.

The electromagnetic locking arrangement 110 comprises one or more electromagnets 112. As described above, where a plurality of electromagnets are provided, these may be positioned or distributed around the operating space. For example, an electromagnetic lock comprising an electromagnet may be provided at each stand of an airport or airfield. In this way, movement of multiple objects may be controlled, possibly simultaneously, to improve traffic control and safety. Each electromagnet may comprise a solenoid and a core. The solenoid may be formed of copper wire. The core may be an iron core. Electromagnetic waves (e.g., from any part of the electromagnetic spectrum) may be used to operate the electromagnetic locking arrangement 110. In an example, the electromagnetic waves may be radio frequency waves or a radio frequency field. Electromagnetic waves may be transmitted from a transmitter provided on, for example, a stand of an airfield, to a receiver provided at the electromagnetic locking arrangement 112. The electromagnetic waves may thereby be used to activate or deactivate the electromagnetic locking arrangement as required, for example at the appropriate or necessary time. The transmitter may be remotely operated (e.g., by a remote operator).

The one or more electromagnets may comprise one or more fail-safe electromagnets. Fail-safe electromagnets do not provide a magnetic field when not provided with electrical power. In this way, the fail-safe electromagnets are configured to release the object (in Figure 2, the aircraft) when electrical power provided to the electromagnetic locking system 110 is terminated. This is highly advantageous in the event of a power failure or in the event of an emergency.

At least a part of the electromagnetic locking arrangement 110 may be provided at the surface 200. The at least a part of the electromagnetic locking arrangement 110 may be, or comprise, the electromagnet, or a plate in which the electromagnet is provided or housed. That is, the at least a part of the electromagnetic locking arrangement 110 may be provided flush with the surface 200, or such that it projects from the surface 200, or such that the surface 200 is not provided on or over the at least a part of the electromagnetic locking arrangement 110. In this way, the at least a part of the electromagnetic locking arrangement 110 is not covered by the surface 200. Advantageously, the level of electrical power required to generate a magnetic field sufficient to hold the object in place is lower when compared to an arrangement in with the at least a part of the electromagnetic locking arrangement 110 is covered by the surface 200 (e.g., is provided below the surface 200).

Alternatively, or additionally, at least a part of the electromagnetic locking arrangement 110 may be provided below the surface 200. The at least a part of the electromagnetic locking arrangement 110 may be, or comprise, the electromagnet, or a plate in which the electromagnet is provided or housed. That is, the at least a part of the electromagnetic locking arrangement 110 may be provided underneath the surface, such that the surface 200 is provided on or over the at least a part of the electromagnetic locking arrangement 110. Advantageously, in this way, the at least a part of the electromagnetic locking arrangement 110 is protected by the surface 200. It will be appreciated that the level of electrical power provided to the electromagnetic locking arrangement 110 may need to be increased relative to a surface-provided arrangement, to compensate for the surface material between the electromagnetic locking arrangement 110 and the part of the object on which the magnetic field acts.

At least a part of the electromagnetic locking arrangement 110 may be provided in a ground plate 150. The at least a part of the electromagnetic locking arrangement 110 may be, or comprise, the electromagnet. The ground plate 150 may be installed at the surface 200, or below the surface 200. Advantageously, the at least a part of the electromagnetic locking arrangement may be protected, by virtue of being housed in, the ground plate 150. Furthermore, this may simplify installation of the electromagnetic locking arrangement 110.

The locking system 100 may further comprise an override system 160. The override system 160 may be provided in the control arrangement 120. The override system 160 is operable to control the electromagnetic locking arrangement 110 to release the object, such as the aircraft 200 or item of cargo, based on an override signal. Where the electromagnets are fail-safe electromagnets, the override system 160 may terminate the provision of electrical power to the electromagnetic locking arrangement 110 based on an override signal, thereby to release the aircraft or item of cargo. Advantageously, the electromagnetic locking arrangement 110 can thereby be controlled to release the objects (e.g., deactivated) in the event of an emergency. The override signal may be an instruction from an operator, or may be provided automatically when an emergency situation is detected or when a power failure is detected.

The electromagnetic locking arrangement 110 of the locking system 100 of Figure 2 is described and shown as provided in a stand of an airport or airfield. However, it will be appreciated that the electromagnetic locking arrangement 110 may otherwise be provided in a runway or taxiway of an airport or airfield. Additionally, or alternatively, the electromagnetic locking arrangement 110 may otherwise be provided in a deck of a cargo ship, or at a floor of a hangar. In the context of aircraft carriers or other offshore installations, the locking system 100 prevents loss of assets overboard.

Furthermore, whilst the electromagnetic locking arrangement 110 of the locking system 100 of Figure 2 is described and shown as provided in a stand of an airport or airfield, it will be appreciated that the invention is highly advantageous when used in conjunction with items of cargo. The locking system 100 can advantageously prevent loss or misplacement of cargo due to unintentional, unauthorised and/or inadvertent movement of said items of cargo. Furthermore, the electromagnetic locking arrangement 110 may replace existing mechanical components, such as twist locks or stacking cones.

As described above, the control arrangement 120 of the locking system 100 may be operated by a remote operator to control the operation of the electromagnetic locking arrangement 110. The control arrangement 120 may be provided at a remote device, such as a PC or tablet, which can be operated by the remote operator.

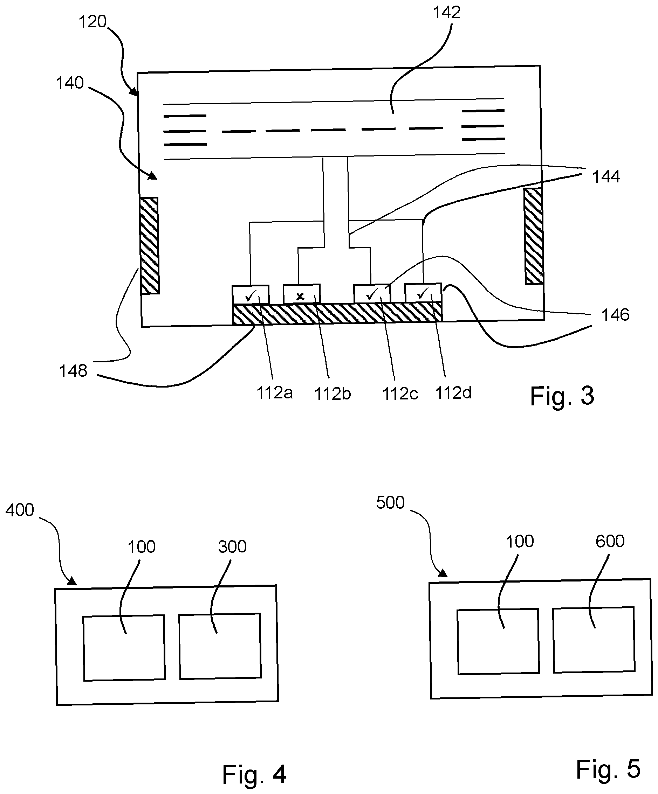

Referring to Figure 3, a user interface 140 of the control arrangement 120 is shown. The layout of the operation space is displayed on the user interface 140. In the example illustrated in Figure 3, the operation space is an airport. The runway is indicated at 142. A plurality of taxiways are indicated at 144. A plurality of stands are indicated at 146. Buildings or structures are indicated at 148. The user interface 140 may be provided on a PC or tablet in a control tower of an airport, airfield, or cargo ship. Additionally, or alternatively, the user interface 140 may be provided on a PC or tablet accessible by a member of ground operations crew.

The electromagnetic locking arrangement 110 is displayed at the user interface 140, with each of the electromagnetic locks indicated at 112a, 112b, 112c, 112d. From the user interface 140, a remote operator can selectively operate the electromagnetic locks of the electromagnetic locking arrangement 110. That is, the remote operator may switch on or off each electromagnetic lock via the user interface 140. In this way, airport traffic can be controlled, improving safety for aircrew and ground operations crew. This also reduces risk of loss of assets (e.g., aircraft) as a result of inadvertent, authorised and/or unexpected movement of said assets. As shown in Figure 3, the electromagnetic locking arrangement 110 is operated to attract the object at electromagnetic lock 112a, 112c and 112d. The electromagnetic locking arrangement 110 is not operated to attract the object at electromagnetic lock 112b. In this way, only object at electromagnetic lock 112b may be allowed or authorised to move. This improves safety and minimises risk of loss of assets. The electromagnetic locking arrangement 110 may be controlled via the user interface 140, for example by user input to switch the locking status of each electromagnetic lock 112a - 112d. It will be appreciated from the description herein that the user interface 140 may provide the locking status indicator system 130, or form part of the locking status indicator system 130.

Referring to Figure 4, a vehicle locking system 400 is shown. The vehicle locking system 400 comprises the locking system 100 and a vehicle 300. The locking system 100 may comprise any or all of the features of the locking system 100 described herein. The vehicle 300 may be an aircraft 300. The aircraft 300 may be an airplane or helicopter. The aircraft 300 may be an electric aircraft. Alternatively, the vehicle 300 may be a train, locomotive, or heavy goods vehicle.

Referring to Figure 5, a cargo locking system 500 is shown. The cargo locking system 500 comprises the locking system 100 and an item of cargo 600. The locking system 100 may comprise any or all of the features of the locking system 100 described herein. The item of cargo 600 may be a container, such as a shipping container, or other freight article.

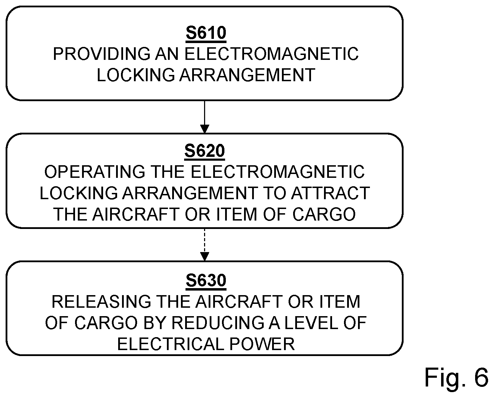

Referring to Figure 6, a method of locking an object, for example a vehicle or item of cargo, in a position on a surface is shown. Step S610 comprises providing an electromagnetic locking arrangement configured to be selectively operatable to attract the aircraft or item of cargo. Step S620 comprises operating the electromagnetic locking arrangement to attract the aircraft or item of cargo, thereby to lock the aircraft or item of cargo in the position on the surface. Optional step S630 comprises releasing the aircraft or item of cargo by reducing a level of electrical power provided to the electromagnetic locking arrangement below a threshold level.

## Claims

1. A locking system (100) for locking a vehicle (300) or item of cargo (600) in a position (210) on a surface (300), the locking system comprising:
an electromagnetic locking arrangement (110) configured to be selectively operatable to attract the vehicle or item of cargo, thereby to lock the vehicle or item of cargo in the position on the surface.

2. The locking system according to claim 1, wherein the locking system comprises a control arrangement (120) operable to control the provision of electrical power to the electromagnetic locking arrangement.

3. The locking system according to claim 1 or claim 2, wherein the locking system comprises a locking status indicator system (130).

4. The locking system according to any one of the preceding claims, wherein the electromagnetic locking arrangement comprises one or more electromagnets (112).

5. The locking system according to claim 4, wherein the one or more electromagnets (112) comprises one or more fail-safe electromagnets configured to release the vehicle or item of cargo when electrical power provided to the electromagnetic locking system is terminated.

6. The locking system according to any one of the preceding claims, wherein at least a part of the electromagnetic locking arrangement (110) is provided at the surface (200).

7. The locking system according to any one of the preceding claims, wherein at least a part of the electromagnetic locking arrangement (110) is provided below the surface (200).

8. The locking system according to any one of the preceding claims, wherein at least a part of the electromagnetic locking arrangement (110) is provided in a ground plate (150).

9. The locking system according to any one of the preceding claims, comprising an override system (160) operable to control the electromagnetic locking arrangement to release the vehicle or item of cargo based on an override signal.

10. The locking system according to any one of the preceding claims, wherein the electromagnetic locking arrangement (110) is provided in a runway, taxiway, or stand of an airport or airfield, a deck of a cargo ship, or a floor of a hangar.

11. A vehicle locking system (400) comprising:
the locking system (100) according to any one of the preceding claims; and
a vehicle (300).

12. A vehicle locking system according to claim 11, wherein the vehicle is an aircraft (300).

13. A cargo locking system (500) comprising:
the locking system (100) according to any one of claims 1 to 10; and
an item of cargo (600).

14. A method of locking a vehicle (300) or item of cargo (600) in a position (210) on a surface (200), comprising:
providing an electromagnetic locking arrangement (110) configured to be selectively operatable to attract the vehicle or item of cargo; and
operating the electromagnetic locking arrangement to attract the vehicle or item of cargo, thereby to lock the vehicle or item of cargo in the position on the surface.

15. The method according to claim 14, comprising:
releasing the vehicle (300) or item of cargo (600) by reducing a level of electrical power provided to the electromagnetic locking arrangement (110) below a threshold level.
